# EUROPÄISCHE PATENTSCHRIFT

(11) **EP 0 584 616 B1**
(45) Veröffentlichungstag und Bekanntmachung des Hinweises auf die Patenterteilung: **19.06.1996**
(21) Anmeldenummer: 93112669.2
(22) Anmeldetag: 06.08.1993
(51) Int. Cl.: H02G 15/013

(54) **Anordnung für Mehrfachkabeleinführungen bei Kabelmuffen**
Assembly for a plurality of cable entries for cable sleeves
Structure pour plusieurs entrées de câbles pour manchons de câbles

(30) Priorität: 19.08.1992 DE 4227442
(43) Veröffentlichungstag der Anmeldung: 02.03.1994
(73) Patentinhaber: RXS Kabelgarnituren Gesellschaft mit beschränkter Haftung, D-58093 Hagen (DE)
(72) Erfinder: Boscher, Georg, Dipl.-Phys., D-58093 Hagen (DE); Sagemühl, Dieter, Dipl.-Ing., D-58313 Herdecke (DE); Amrhein, Klaus, D-58093 Hagen (DE)
(74) Vertreter: Fuchs, Franz-Josef, Dr.-Ing.

(56) Entgegenhaltungen:
- WO-A-90/07812
- DE-A- 3 242 073
- DE-A- 4 208 285
- DE-U- 7 516 723
- DE-U- 9 006 229

## Beschreibung

Die Erfindung betrifft eine Anordnung für Mehrfachkabeleinführungen bei Kabelmuffen, bestehend aus einem Dichtungskörper mit mehreren zylindrischen Kabeleinführungsstutzen und darauf aufgesetzten Schrumpfschlauchstücken und Verfahren zur Herstellung einer solchen Anordnung.

Aus der Schrift WO 90/07812 ist ein Spleißgehäuse für Kabel bekannt, bei dem ein Dichtungskörper mit Mehrfachkabeleinführungen verwendet wird. Dieser Dichtungskörper besitzt mehrere fest angeformte, zylindrische Kabeleinführungsstutzen, auf deren Enden Schrumpfschlauchstücke aufgesetzt sind, die bei Wärmeeinwirkung auf die eingeführten Kabel aufgeschrumpft werden. Hier handelt es sich um eine Anordnung mit einer vorgegebenen Zahl von Kabeleinführungen, wobei diese Kabeleinführungen auch im Durchmessermaß fest vorgegeben sind. Außerdem ergeben sich beim Schrumpfen der Schrumpfschlauchstücke gewisse Schwierigkeiten, da durch die Wärmeeinwirkung beim Schrumpfen eines Schrumpfschlauchstückes auch das benachbart liegende Schrumpfschlauchstück beeinflußt werden kann. Es muß also sehr sorgfältig und eventuell mit geeigneten Wärmeschutzvorrichtungen gearbeitet werden.

Aufgabe der vorliegenden Erfindung ist nun, eine Anordnung für Mehrfachkabeleinführungen zu schaffen, bei der die geschilderten Gefahren nicht bestehen, wobei auch die Montage an den Kabeleinführungen erleichtert werden soll.Die gestellte Aufgabe wird mit einer ersten Anordnung der eingangs erläuterten Art dadurch gelöst, daß der Dichtungskörper mehrere Einlaßbohrungen aufweist, in denen Kabeleinführungsstutzen je nach Bedarf einsetzbar sind, daß die Kabeleinführungsstutzen einen umlaufenden Dichtungsflansch aufweisen, daß zwischen dem jeweiligen Dichtungsflansch und der den Dichtungsflansch zuweisenden Dichtungsfläche des Dichtungskörpers eine Dichtungseinlage angeordnet ist, daß jeder Kabeleinführungsstutzen an seinem Einsatzende ein Gewinde aufweist und daß auf das Gewinde eine Druckmutter aufschraubbar ist.

Eine weitere Lösung der gestellten Aufgabe ergibt sich aber auch mit einer zweiten Anordnung der eingangs erläutrten Art dadurch, daß der Dichtungskörper mehrere Einlaßbohrungen aufweist, an denen Kabeleinführungsstutzen je nach Bedarf ansetzbar sind, daß die Kabeleinführungsstutzen einen umlaufenden Dichtungsflansch aufweisen, daß jeder Kabeleinführungsstutzen eine sich am umlaufenden Dichtungsflansch abstützende Überwurfmutter aufweist, daß in jeder Einlaßbohrung ein Einlaßstutzen einsetzbar ist, daß jeder Einlaßstutzen an einem Ende einen umlaufenden Dichtungsflansch aufweist, daß das andere Ende des Einlaßstutzens mit einem Gewinde versehen ist, auf welches eine Druckmutter aufschraubbar ist, mit der bei Einfügung einer ersten Dichtungseinlage der Einlaßstutzen druckdicht fixierbar ist und daß auf den noch freien Teil des Gewindes bei Einfügung einer zweiten Dichtungseinlage die Überwurfmutter des Kabeleinführungsstutzens so einschraubbar ist, daß der Kabeleinführungsstutzen druckdicht fixiert ist.

Eine weitere Lösung der gestellten Aufgabe läßt sich mit einer Anordnung der eingangs erläuterten Art auch dadurch erreichen, daß der Dichtungskörper Einlaßstutzen aufweist, daß jeder Einlaßstutzen am freien Ende ein Gewinde aufweist, daß jeder anzusetzende Kabeleinführungsstutzen an einem Ende einen umlaufenden Dichtungsflansch und eine sich daran abstützende Uberwurfmutter aufweist, und daß die Uberwurfmutter auf das Gewinde des Einlaßstutzens bei Einfügung einer Dichtungseinlage druckdicht so aufschraubbar ist, daß der Kabeleinführungsstutzen fixiert ist.

Weiterhin stellt sich für vorliegende Erfindung die Aufgabe, ein Verfahren zur Herstellung einer Anordnung für Mehrfachkabeleinführungen zu schaffen. Diese gestellte Aufgabe wird mit den Verfahren gelöst, dessen Merkmale in den Patentansprüchen 20 bis 22 zusammengestellt sind.

Wesentliche Vorteile gegenüber dem genannten Stand der Technik sind nun mit den Anordnungen gemäß der Erfindung darin zu sehen, daß bei allen Lösungsvorschlägen die Anordnung eines Kabels in einer Mehrfachkabeleinführung nicht am Dichtungskörper und nicht im dichten Verbund mit anderen Kabeleinführungen erfolgen muß, sondern daß jede Kabeleinführung separat vorgenommen bzw. so vorbereitet werden kann, daß die Montage wesentlich vereinfacht ist und daß eine gegenseitige Beeinflussung beim Schrumpfvorgang nicht erfolgen kann. Bei den Ausführungen gemäß der Erfindung werden nun zunächst separate Kabeleinführungsstutzen verwendet, in welche die Kabel eingeführt und durch Schrumpfen von Schrumpfschlauchstücken fixiert und abgedichtet werden. Erst dann werden diese montierten Anordnungen in den Einlaßbohrungen oder Einlaßstutzen des Dichtungskörpers dicht eingesetzt und zwar mit mechanischen Mitteln, so daß hier die sonst übliche Wärmezufuhr zum Schrumpfen nicht mehr nötig ist. Die Abdichtung und Fixierung der einzelnen fertigmontierten Kabeleinführungen gestaltet sich somit sehr einfach und die Gefahr von gegenseitigen Beeinflussungen ist nicht mehr gegeben. Durch die Wahlmöglichkeit von verschiedenen Kabeleinführungsstutzen mit oder ohne Abschlüssen ist ein weiterer großer Vorteil gegeben; denn dadurch lassen sich die Kabeleinführungen optimal den erforderlichen Verhältnissen anpassen. So können auch zu einem späteren Zeitpunkt weitere Kabeleinführungen nachgerüstet werden, ohne daß die bereits vorliegenden beeinflußt werden. Durch die einfache Anschlußtechnik können beispielsweise auch Kabel mitsamt ihren Kabeleinführungsstutzen ausgetauscht werden ohne daß die anderen Kabeleinführungen dadurch Schaden erleiden. Diese Anschlußtechnik bietet somit viele Möglichkeiten, so daß sie nicht nur für die ursprüngliche Montage sondern auch für spätere Anwendungswünsche Vorteile bietet.

Die Erfindung wird nun anhand von fünf Figuren näher erläutert.
- Figur 1: zeigt den Einsatzbereich für Mehrfachkabeleinführungen bei Kabelmuffen.
- Figur 2: zeigt einen Dichtungskörper mit einem fest angeordneten Kabeleinführungsstutzen.
- Figur 3: zeigt ein erstes Ausführungsbeispiel gemäß der Erfindung.
- Figur 4: zeigt ein zweites Ausführungsbeispiel gemäß der Erfindung.
- Figur 5: zeigt ein drittes Ausführungsbeispiel gemäß der Erfindung.
- Figur 6: zeigt ein Ausführungsbeispiel mit Stopfbuchsenabdichtung.
- Figur 7: zeigt einen einschraubbaren Ansatz.

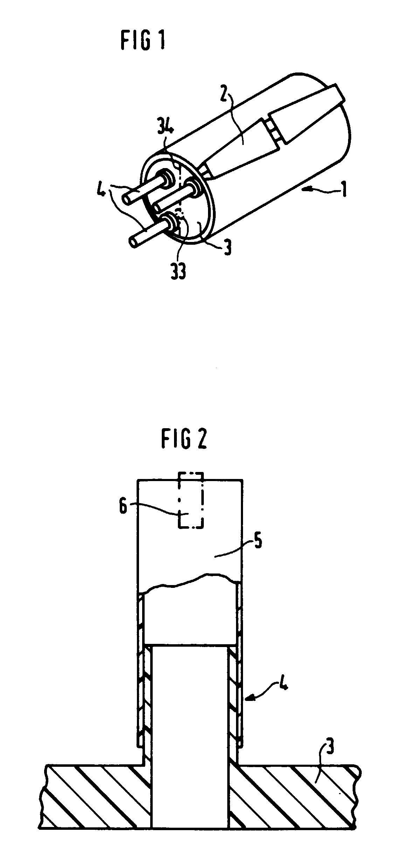

In Figur 1 wird das Prinzip der Erfindung angedeutet. Es handelt sich dabei um eine Kabelmuffe 1, die im wesentlichen aus einem Muffenrohr besteht, das auf stirnseitig angeordnete Dichtungskörper 3 dicht aufgezogen ist. Das Muffenrohr wird beispielsweise mit einem keilförmigen Längsverschluß 2 verschlossen. In den Dichtungskörpern sind nun mehrere Kabeleinführungsstutzen 4 angeordnet, durch die je nach Bedarf die erforderliche Anzahl von Kabeln eingeführt wird. Diese Kabeleinführungsstutzen 4 sind erfindungsgemäß allein einsetzbar, wobei eine Vielzahl von Möglichkeiten gegeben ist, wie bereits oben angedeutet wurde. So können beispielsweise Kabeleinführungsstutzen 4 mit verschiedenen Durchmessern, mit oder ohne dichten Abschluß und mit verschiedenen Anschlüssen eingesetzt werden, wie nachstehend anhand der weiteren Figuren erläutet wird.

Figur 2 zeigt eine Möglichkeit zur Einführung von Kabeln, wobei diese durch einen am Dichtungskörper 3 angeformten Einlaßstutzen in an sich bekannter Weise vorgenommen wird. Auf diesem Einlaßstutzen wird ein Schrumpfschlauch 5 auf das eingeführte Kabel aufgeschrumpft. Bei Einführung mehrerer Kabel durch diesen Einlaßstutzen können am Ende des Schrumpfschlauchstückes 5 entsprechende Maßnahmen zur Abdichtung der Zwickelbereiche zwischen den eingeführten Kabeln, zum Beispiel in Form von an sich bekannten Klammerelementen 6 mit oder ohne Dichtungseinsatz, getroffen werden.

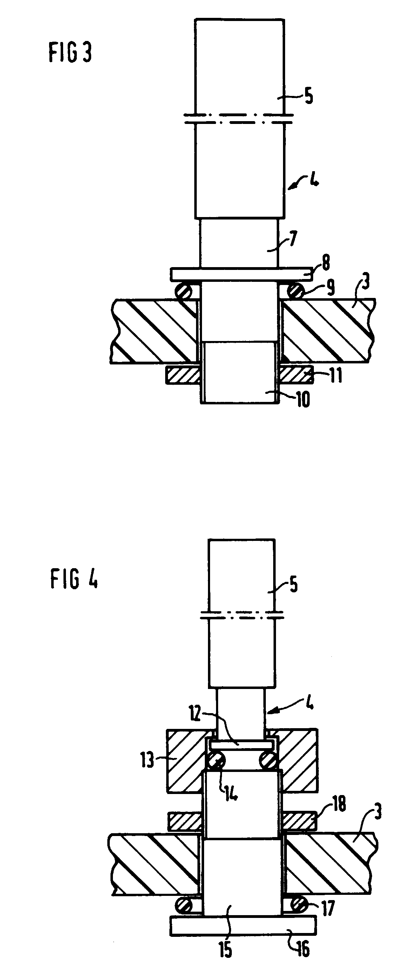

In Figur 3 ist nun eine Anordnung für Mehrfacheinführungen gemäß der Erfindung gezeigt, bei der die Kabeleinführungsstutzen 4 aus einem Schrumpfschlauchstück 5 und einem rohrförmigen Einführungsteil 7 besteht. Auf dem äußeren Umfang des Einführungsteils 7 ist ein umlaufender Dichtungsflansch 8 angeordnet und das Ende des Einführungsteils 7 ist mit einem Gewinde 10 versehen, auf das eine Druckmutter 11 aufgeschraubt werden kann. Der Kabeleinführungsstutzen 4 kann nun bei Bedarf in eine der Einlaßbohrungen des Dichtungskörpers 3 mit seinem Gewindeende 10 eingeführt werden, wobei vorher eine Dichtungseinlage 9, zum Beispiel ein O-Ring oder eine ringförmige Flachdichtung, aufgeschoben wird. Nach dem Einsetzen des Kabeleinführungsstutzens 4 wird dann die Druckmutter 11 auf der Gegenseite aufgeschraubt, so daß der Kabeleinführungsstutzen 4 dicht fixiert wird, wobei die Dichtungseinlage 9 zwischen dem umlaufenden Dichtungsflansch 8 und der Dichtungsfläche des Dichtungskörpers 3 um die jeweilige Einlaßbohrung herum eingepreßt wird, so daß sich die erforderliche Abdichtung ergibt. Ganz allgemein kann bei allen Ausführungsbeispielen die Dichtungseinlage 9 sowohl auf der Außenseite wie auch auf der Innenseite des Dichtungskörpers 3 angeordnet werden, wobei der Anordnung auf der Innenseite wegen des besseren Schutzes der Vorzug zu geben ist. Bei dieser letztgenannten Ausführung sollte dann bei diesem Ausführungsbeispiel eine zusätzliche Scheibe angeordnet werden, damit die Dichtungseinlage 9 nicht durch die Druckmutter 11 verletzt wird. Als Schrumpfschlauchstück 5 könnte beispielsweise ein kappenförmiger Abschluß gewählt werden, der bei Nichtbelegung dicht abschließt und der erst bei Bedarf abgetrennt werden muß.

In Figur 4 wird als zweites Ausführungsbeispiel der Erfindung ein Kabeleinführungsstutzen 4 gezeigt, der auf einen Einlaßstutzen 15 mittels einer Überwurfmutter 13 aufgeschraubt werden kann. Hier ist in der Einlaßbohrung des Dichtungskörpers 3 bereits ein Einlaßstutzen 15 montiert, der an einem Ende einen umlaufenden Dichtungsflansch 16 aufweist, wobei durch ihn die Dichtungseinlage 17 gegen die Dichtungsfläche des Dichtungskörpers 3 gepreßt wird. Diese Pressung erfolgt durch Aufschrauben einer Druckmutter 18 auf ein am zweiten Ende des Einlaßstutzens 15 befindlichen Gewinde. Auf diese Weise ist die Einlaßbohrung des Dichtungskörpers 3 bereits mit einer Anschlußeinheit für den eigentlichen Kabeleinführungsstutzen 4 ausgerüstet. Dieser Kabeleinführungsstutzen 4 besitzt ebenfalls einen umlaufenden Dichtungsflansch 12 auf dem sich eine Überwurfmutter 13 aufstützt, wenn diese auf das Gewindeende des Einlaßstutzens 15 aufgeschraubt wird. Hier wird in der Trennebene innerhalb der Überwurfmutter 13 ebenfalls eine Dichtungseinlage 14 eingelegt, die für Abdichtung in der Trennebene sorgt.

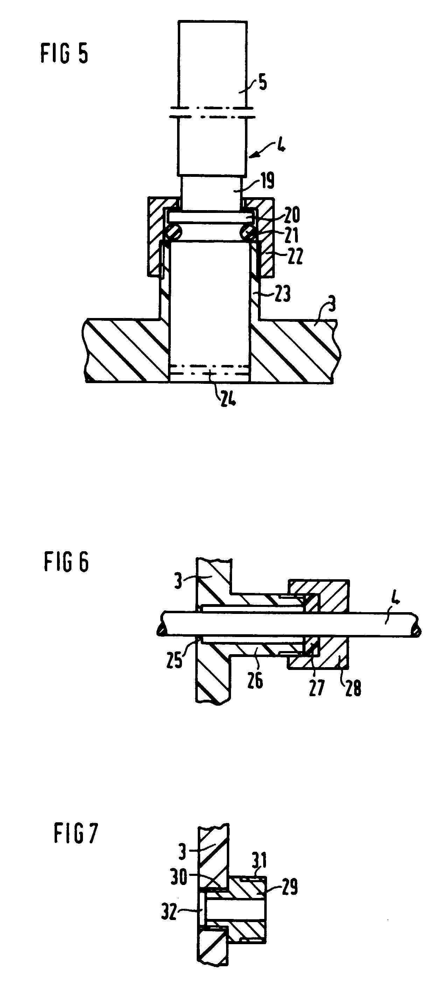

Die Figur 5 zeigt ein Ausführungsbeispiel gemäß der Erfindung, bei dem im Prinzip für den eigentlichen Kabeleinführungsstutzen 4 die gleiche Bauart gewählt ist wie bei dem von Figur 4, nämlich die Ansetzung des rohrförmigen Teils 19 des Kabeleinführungsstutzens 4 mit Hilfe einer Überwurfmutter 22 und einer Dichtungseinlage 21. Die Abstützung der Überwurfmutter 22 erfolgt einerseits an einem umlaufenden Dichtungsflansch 20 des rohrförmigen Teils 19, während andererseits der Gewindeteil der Überwurfmutter 22 auf das Gewinde des fest am Dichtungskörper 3 angeformten Einlaßstutzen 23 eingreift. Die übrigen Verhältnisse gleichen den vorher bereits erläuterten. Hier ist zusätzlich angedeutet, daß ein Abschluß auch als ausbrechbarer Einsatz 24 ausgeführt werden kann, wobei die Anordnung an beliebiger Stelle innerhalb der rohrförmigen Teile vorgenommen werden kann. Bei Bedarf wird dieser Abschluß 24 dann ausgebrochen und die Einführungsöffnung kann benutzt werden.

Figur 6 zeigt ein Ausführungsbeispiel, bei dem der Kabeleinführungsstutzen sogar durch eine Überwurfmutter 28 mit einer Art Stopfbuchsendichtung 27 ersetzt ist. Die Überwurfmutter 28 wird hier auf einen angeformten Einlaßstutzen 26 mit Gewinde aufgeschraubt, bis mit der Stopfbuchsendichtung 27 die nötige Dichtwirkung erreicht ist. Diese Anordnung ist zweckmäßigerweise auf der nach innen gerichteten Seite des Dichtungskörpers angesetzt. Auf der Außenseite kann zusätzlich als Schutz eine Art Lippendichtung 25 in Form einer umlaufenden Lamelle vorhanden sein.

Die Figur 7 zeigt, daß die Einlaßöffnung 32 des Dichtungskörpers 3 bereits mit einem Gewinde 30 versehen sein kann, so daß mit Gewinde versehene Kabeleinlaßstutzen oder Ansätze 29 für eine als Stopfbuchse ausgebildete Anordnung wie z.B. nach Figur 6 direkt eingeschraubt werden können. Der gezeigte Ansatz 29 trägt ein Außengewinde 31 zum Eingriff z.B. einer Überwurfmutter oder ähnlichem. Hier ist der Ansatz 29 als abgesetztes Teil gezeigt, doch kann er auch als gleichmäßig starkes Nippelteil mit einem durchgehenden Gewinde ausgebildet sein.

Im übrigen kann der Dichtungskörper zusätzlich in an sich bekannter Weise auch zusätzlich quergeteilt sein, wobei in der Trennebene 34 (Figur 1) Einführungsöffnungen 33 (Figur 1) eingebracht sind. So können bei einem derartigen Abschluß einer Kabelmuffe zusätzlich zu den Einlässen mit den oben aufgezeigten Kabeleinführungen in der Trennebene 34 auch ungeschnittene Kabel 4 zusätzlich ein- bzw. ausgeführt werden. Die Trennebene 34 wird mit geeignetem Dichtungsmaterial abgedichtet.

Die Kabeleinführungsstutzen können sowohl aus Metall als auch aus Kunststoff bestehen. Erstere können auch kunststoffbeschichtet sein.

## Patentansprüche

1. Anordnung für Mehrfachkabeleinführungen bei Kabelmuffen, bestehend aus einem Dichtungskörper (3) mit mehreren zylindrischen Kabeleinführungsstutzen (4) und darauf aufgesetzten Schrumpfschlauchstücken (5),
**dadurch gekennzeichnet,**
daß der Dichtungskörper (3) mehrere Einlaßbohrungen aufweist, in die Kabeleinführungsstutzen (4) je nach Bedarf einsetzbar sind, daß die Kabeleinführungsstutzen (4) einen umlaufenden Dichtungsflansch (8) aufweisen, daß zwischen dem jeweiligen Dichtungsflansch (8) und der dem Dichtungsflansch (8) zuweisenoen Dichtungsfläche des Dichtungskörpers (3) eine Dichtunseinlage (9) angeordnet ist, daß jeder Kabeleinführungsstutzen (4) an seinem Einsatzende ein Gewinde (10) aufweist und daß auf das Gewinde (10) eine Druckmutter (11) aufschraubbar ist.

2. Anordnung für Mehrfachkabeleinführungen bei Kabelmuffen, bestehend aus einem Dichtungskörper (3) mit mehreren zylindrischen Kabeleinführungsstutzen (4) und darauf aufgesetzten Schrumpfschlauchstücken (5),
**dadurch gekennzeichnet**,
daß der Dichtungskörper (3) mehrere Einlaßbohrungen aufweist, in die Kabeleinführungsstutzen (4) je nach Bedarf einsetzbar sind, daß die Kabeleinführungsstutzen (4) einen umlaufenden Dichtungsflansch (12) aufweisen, daß jeder Kabeleinführungsstutzen (4) eine sich am umlaufenden Dichtungsflansch (12) abstützende Überwurfmutter (13) aufweist, daß in jeder Einlaßbohrung ein Einlaßstutzen (15) einsetzbar ist, daß jeder Einlaßstutzen (15) an einem Ende einen umlaufenden Dichtungsflansch (16) aufweist, daß das andere Ende des Einlaßstutzens (15) mit einem Gewinde versehen ist, auf welches eine Druckmutter (18) aufschraubbar ist, mit der bei Einfügung einer ersten Dichtungseinlage (17) der Einlaßstutzen (15) druckdicht fixierbar ist und daß auf den noch freien Teil des Gewindes bei Einfügung einer zweiten Dichtungseinlage (14) die Überwurfmutter (13) des Kabeleinführungsstutzens (4) so einschraubbar ist, daß der Kabeleinführungsstutzen (4) durchdicht fixiert ist.

3. Anordnung für Mehrfachkabeleinführungen bei Kabelmuffen, bestehend aus einem Dichtungskörper (3) mit mehreren zylindrischen Kabeleinführungsstutzen (4) und darauf aufgesetzten Schrumpfschlauchstücken (5),
**dadurch gekennzeichnet,**
daß der Dichtungskörper (3) fest angeformte Einlaßstutzen (23) aufweist, daß jeder Einlaßstutzen (13) am freien Ende ein Gewinde aufweist, das jeder Kabeleinführungsstutzen (4) eine Überwurfmutter (22) aufweist und daß die Überwurfmutter (22) auf das Gewinde des Einlaßstutzens (23) bei Einfügung einer Dichtungseinlage (21) druckdicht so aufschraubbar ist, daß der Kabeleinführungsstutzen (4) fixiert ist.

4. Anodnung nach einem der vorhergehnden Asprüche,
**dadurch gekennteichnet,**
daß als Dichtungseinlage (9, 10, 14, 17, 21) ein O-Ring aus elastischem Material verwendet ist.

5. Anordnung nach einem der vorhrgehenden Ansprüche,
**dadurch gekennzeichnet,**
daß die Dichtungseinlage (9,17) am Dichtungskörper (3) auf der Außenseite eingelagert ist.

6. Anordnung nach einem der Ansprüche 1 bis 4,
**dadurch gekennzeichnet,**
daß die Dichtungseinlage (9, 17) am Dichtungskörper (3) auf der Innenseite eingelagert ist.

7. Anordnung nach einem der Ansprüche 1 bis 4,
**dadurch gekennzeichnet,**
daß Dichtungseinlagen (9, 17) sowohl auf der Außenseite wie auch auf der Innenseite eingelagert sind.

8. Anordnung nach einem der vorhergehenden Ansprüche,
**dadurch gekennzeichnet,**
daß die Kabeleinführungsstutzen (4) und/oder die Einlaßstutzen (15) aus Metall bestehen.

9. Anordnung nach einem der Ansprüche 1 bis 7,
**dadurch gekennzeichnet,**
daß die Kabeleinführungsstutzen (4) aus Kunststoff bestehen.

10. Anordnung nach Anspruch 8,
**dadurch gekennzeichnet,**
daß die Kabeleinführungsstutzen (4) kunststoffbeschichtet sind.

11. Anordnung nach einem der vorhergehenden Ansprüche,
**dadurch gekennzeichnet,**
daß nichtbelegte Kabeleinführungsstutzen (4) und/oder Einlaßstutzen (15) einen kappenartigen Abschluß aufweisen.

12. Anordnung nach einem der vorhergehenden Ansprüche,
**dadurch gekennzeichnet,**
daß die Einlaßbohrungen und/oder die Einlaßstutzen (15) und/oder die Kabeleinführungsstutzen (4) mit ausbrechbaren Verschlußwandungen (24) versehen sind.

13. Anordnung nach einem der vorhergehenden Ansprüche,
**dadurch gekennzeichnet,**
daß in einem Kabeleinführungsstutzen (4) mehrere Kabel einführbar sind und daß die Zwickelbereiche am Ende des Schrumpfschlauchstückes (5) mit an sich bekannten Verzweigungsmitteln, vorzugsweise mit Klammerelementen (6), abdichtbar sind.

14. Anordnung nach einem der vorhergehenden Ansprüche,
**dadurch gekennzeichnet,**
daß der Dichtungskörper (3) geteilt ist und in der Trennebene zusätzliche Kabeleinführungsöffnungen aufweist.

15. Anordnung nach einem der vorhergehenden Ansprüche,
**dadurch gekennzeichnet,**
daß die Kabeleinführungsöffnungen des Dichtungskörpers mit umlaufenden Lippendichtungen (25) versehen sind.

16. Anordnung nach einem der vorhergehenden Ansprüche,
**dadurch gekennzeichnet,**
daß die Kabeleinführungsöffnungen (32) des Dichtungskörpers (3) mit Gewinde (30) versehen sind und daß mit Gewinde versehene Kabeleinführungsstutzen, Einlaßstutzen oder Ansätze (29) einschraubbar sind.

17. Anordnung nach Anspruch 16,
**dadurch gekennzeichnet,**
daß der Ansatz (29) abgesetzt und mit zwei Gewinden (30, 31) versehen ist.

18. Anordnung nach Anspruch 16,
**dadurch gekennzeichnet,**
daß der Ansatz als Gewindenippel mit einem durchlaufenden Gewinde ausgebildet ist.

19. Anordnung nach einem der vorhergehenden Ansprüche,
**dadurch gekennzeichnet,**
daß der Kabeleinführungsstutzen als Stopfbuchsendichtung, bestehend aus einer Überwurfmutter (28) und einer Stopfbuchsendichtung (27), ausgebildet ist, die an einem Kabeleinlaßstutzen (2 ) oder einem Ansatz (29) angesetzt ist.

20. Verfahren zur Herstellung einer Anordnung für Mehrfachkabeleinführungen nach einem der Ansprüche 1 oder 4 bis 19,
**dadurch gekennzeichnet,**
daß die Kabeleinführungsstutzen (4) auf die Kabelenden aufgeschoben werden, daß die Schrumpfschlauchstücke (5) auf die Kabel aufgeschrumpft werden, daß dann diese vormontierten Kabeleinführungsstutzen (4) mit den eingeführten Kabeln in die Einlaßbohrungen des Dichtungskörpers (3) eingeführt werden und daß die Kabeleinführungsstutzen (4) mit Schraubmitteln (11) und Dichtungseinlagen (9) druckdicht fixiert werden.

21. Verfahren zur Herstellung einer Anordnung für Mehrfachkabeleinführungen nach einem der Ansprüche 2 oder 4 bis 19,
**dadurch gekennzeichnet,**
daß Einlaßstutzen (15) mit Druckmuttern (18) in den Einlaßbohrungen des Dichtungskörpers (3) bei Zwischenlegung einer Dichtungseinlage (17) druckdicht eingesetzt werden und daß die Kabeleinführungsstutzen (4) mit Schraubmitteln (13) und Dichtungseinlagen (14) an den Enden der Einlaßstutzen druckdicht fixiert werden.

22. Verfahren zur Herstellung einer Anordnung für Mehrfachkabeleinführungen nach einem der Ansprüche 3 bis 19,
**dadurch gekennzeichnet**,
daß die Kabeleinführungsstutzen (4) mit Hilfe von Schraubmitteln (22) unter Zwischenlage einer Dichtungseinlage (21) auf dem Gewinde eines fest angeordneten Einlaßstutzens (23) des Dichtungskörpers (3) druckdicht aufgeschraubt werden.

23. Verfahren nach einem der Ansprüche 20 bis 22,
**dadurch gekennzeichnet,**
daß Klammerelemente (6) in den Zwickelbereichen des Schrumpfschlauchstückes (5) bei Einführung mehrerer Kabel in einem Kabeleinführungsstutzen (4) eingesetzt werden.

## Claims

1. Arrangement for multiple cable entries in cable sleeves, comprising a seal member (3) with a plurality of cylindrical cable entry nipples (4) and shrink hose sections (5) placed thereon, characterized in that the seal member (3) has a plurality of admission holes into which cable entry nipples (4) can be inserted as required, in that the cable entry nipples (4) have a peripheral seal flange (8), in that between the respective seal flange (8) and that seal surface of the seal member (3) which points towards the seal flange (8) there is arranged a seal inlay (9), in that each cable entry nipple (4) has a thread (10) at its insert end and in that a compression nut (11) can be screwed onto the thread (10).

2. Arrangement for multiple cable entries in cable sleeves, comprising a seal member (3) with a plurality of cylindrical cable entry nipples (4) and shrink hose sections (5) placed thereon, characterized in that the seal member (3) has a plurality of admission holes into which cable entry nipples (4) can be inserted as required, in that the cable entry nipples (4) have a peripheral seal flange (12), in that each cable entry nipple (4) has a union nut (13) which is supported on the peripheral seal flange (12), in that an admission nipple (15) can be inserted into each admission hole, in that each admission nipple (15) has at one end a peripheral seal flange (16), in that the other end of the admission nipple (15) is provided with a thread onto which a compression nut (18) can be screwed, with which the admission nipple (15) can be fixed in a pressure-tight manner if a first seal inlay (17) is introduced, and in that, if a second seal inlay (14) is introduced, the union nut (13) of the cable entry nipple (4) can be screwed onto the still free part of the thread in such a way that the cable entry nipple (4) is fixed in a pressure-tight manner.

3. Arrangement for multiple cable entries in cable sleeves, comprising a seal member (3) with a plurality of cylindrical cable entry nipples (4) and shrink hose sections (5) placed thereon, characterized in that the seal member (3) has fixedly moulded admission nipples (23), in that each admission nipple (13) has a thread at the free end, in that each cable entry nipple (4) has a union nut (22) and in that, if a seal inlay (21) is introduced, the union nut (22) can be screwed onto the thread of the admission nipple (23) in a pressure-tight manner in such a way that the cable entry nipple (4) is fixed.

4. Arrangement according to one of the preceding claims, characterized in that an O-ring made of elastic material is used as the seal inlay (9, 10, 14, 17, 21).

5. Arrangement according to one of the preceding claims, characterized in that the seal inlay (9, 17) on the seal member (3) is inlaid on the outside.

6. Arrangement according to one of Claims 1 to 4, characterized in that the seal inlay (9, 17) on the seal member (3) is inlaid on the inside.

7. Arrangement according to one of Claims 1 to 4, characterized in that the seal inlays (9, 17) are inlaid both on the outside and on the inside.

8. Arrangement according to one of the preceding claims, characterized in that the cable entry nipples (4) and/or the admission nipples (4) consist of metal.

9. Arrangement according to one of Claims 1 to 7, characterized in that the cable entry nipples (4) consist of plastic.

10. Arrangement according to Claim 8, characterized in that the cable entry nipples (4) are plastic-coated.

11. Arrangement according to one of the preceding claims, characterized in that unoccupied cable entry nipples (4) and/or admission nipples (15) have a cap-like termination.

12. Arrangement according to one of the preceding claims, characterized in that the admission holes and/or the admission nipples (15) and/or the cable entry nipples (4) are provided with break-out closure walls (24).

13. Arrangement according to one of the preceding claims, characterized in that a plurality of cables can be inserted in one cable entry nipple (4) and in that the interstitial regions at the end of the shrink hose section (5) can be sealed off with branching means which are known per se, preferably using clamping elements (6).

14. Arrangement according to one of the preceding claims, characterized in that the seal member (3) is divided and has additional cable entry openings in the parting plane.

15. Arrangement according to one of the preceding claims, characterized in that the cable entry openings of the seal member are provided with peripheral lip seals (25).

16. Arrangement according to one of the preceding claims, characterized in that the cable entry openings (32) of the seal member (3) are provided with threads (30) and in that cable entry nipples, admission nipples or attachments (29) which are provided with threads can be screwed in.

17. Arrangement according to Claim 16, characterized in that the attachment (29) is offset and is provided with two threads (30, 31).

18. Arrangement according to Claim 16, characterized in that the attachment is designed as a threaded nipple with a continuous thread.

19. Arrangement according to one of the preceding claims, characterized in that the cable entry nipple is designed as a stuffing box seal, comprising a union nut (28) and a sealing box seal (27), which is attached to a cable admission nipple (2) or an attachment (29).

20. Method for manufacturing an arrangement for multiple cable entries according to one of Claims 1 or 4 to 19, characterized in that the cable entry nipples (4) are pushed onto the cable ends, in that the shrink hose sections (5) are shrunk onto the cables, in that these preassembled cable entry nipples (4) with the inserted cables are then inserted into the admission holes of the seal member (3), and in that the cable entry nipples (4) are fixed in a pressure-tight manner using screwing means (11) and seal inlays (9).

21. Method for manufacturing an arrangement for multiple cable entries according to one of Claims 2 or 4 to 19, characterized in that admission nipples (15) having compression nuts (18) in the admission holes of the seal member (3) are inserted in a pressure-tight manner with the interposition of a seal inlay (17), and in that the cable entry nipples (4) are fixed in a pressure-tight manner at the ends of the admission nipples using screwing means (13) and seal inlays (14).

22. Method for manufacturing an arrangement for multiple cable entries according to one of Claims 3 to 19, characterized in that the cable entry nipples (4) are screwed on in a pressure-tight manner, with the aid of screwing means (22) and with the interposition of a seal inlay (21), on the thread of a fixedly arranged admission nipple (23) of the seal member (3).

23. Method according to one of Claims 20 to 22, characterized in that clamping elements (6) are inserted in the interstitial regions of the shrink hose section (5) when a plurality of cables are inserted in one cable entry nipple (4).

## Revendications

1. Dispositif pour des entrées de câbles multiples dans des manchons de câble, constitué d'un corps (3) d'étanchéité comportant plusieurs raccords (4) d'entrée de câbles cylindriques et des pièces (5) de gaine rétrécissables disposées sur ces raccords, caractérisé en ce que le corps (3) d'étanchéité comporte plusieurs trous d'entrée, dans lesquels peuvent être insérés suivant les besoins les raccords (4) d'entrée de câbles, en ce que les raccords (4) d'entrée de câbles comportent une bride (8) d'étanchéité qui les entoure, en ce que, entre la bride (8) d'étanchéité et la surface d'étanchéité du corps (3) d'étanchéité affecté à la bride (8) d'étanchéité, il est prévu une pièce (9) d'étanchéité, en ce que chaque raccord (4) d'entrée de câble comporte à son extrémité d'insertion un filetage (10) et en ce qu'un écrou (11) de serrage peut être vissé sur le filetage (10).

2. Dispositif pour des entrées de câbles multiples dans des manchons de câble, constitué d'un corps (3) d'étanchéité comportant plusieurs raccords (4) d'entrée de câbles cylindriques et des pièces (5) de gaine rétrécissables disposées sur ces raccords, caractérisé en ce que le corps (3) d'étanchéité comporte plusieurs trous d'entrée, dans lesquels peuvent être insérés suivant les besoins les raccords (4) d'entrée de câble, en ce que les raccords (4) d'entrée de câble comportent une bride (12) d'étanchéité qui les entoure, en ce que chaque raccord (4) d'entrée de câble comporte un écrou (13) d'accouplement s'appuyant sur la bride (12) d'étanchéité, en ce qu'un raccord (15) d'entrée peut être inséré dans chaque trou d'entrée, en ce que chaque raccord (15) d'entrée comporte à son extrémité une bride (16) d'étanchéité qui l'entoure, en ce que l'autre extrémité du raccord (15) d'entrée comporte un filetage, sur lequel un écrou (18) de serrage peut être vissé, par lequel, lors de l'insertion d'une première pièce (17) d'étanchéité, on peut fixer le raccord (15) d'entrée de manière étanche et en ce que, lors de l'insertion d'une seconde pièce (14) d'étanchéité, l'écrou (13) d'accouplement du raccord (4) d'entrée de câble peut être vissé sur la partie encore libre du filetage de manière que le raccord (4) d'entrée de câble soit immobilisé de manière étanche à la pression.

3. Dispositif pour des entrées de câbles multiples dans des manchons de câble, constitué d'un corps (3) d'étanchéité comportant plusieurs raccords (4) d'entrée de câbles cylindriques et des pièces (5) de gaines rétrécissables disposées sur ces raccords, caractérisé en ce que le corps (3) d'étanchéité comporte des raccords (23) d'entrée moulés rigidement, en ce que chaque raccord (13) d'entrée comporte, à son extrémité libre, un filetage, en ce que chaque raccord (4) d'entrée de câble comporte un écrou (22) d'accouplement et en ce que l'écrou (22) d'accouplement est, lors de l'insertion d'une pièce (21) d'étanchéité, vissé de manière étanche à la pression sur le filetage du raccord (23) d'entrée de manière que le raccord (4) d'entrée de câble soit immobilisé.

4. Dispositif suivant l'une des revendications précédentes, caractérisé en ce qu'on utilise, en tant que pièce (9,10,14,17,21) d'étanchéité, un joint torique en un matériau élastique.

5. Dispositif suivant l'une des revendications précédentes, caractérisé en ce que la pièce (9,17) d'étanchéité est montée sur le corps (3) d'étanchéité du côté extérieur.

6. Dispositif suivant l'une des revendications 1 à 4, caractérisé en ce que la pièce (9,17) d'étanchéité est montée sur le corps (3) d'étanchéité du côté intérieur.

7. Dispositif suivant l'une des revendications 1 à 4, caractérisé en ce que des pièces (9,17) d'étanchéité sont montées aussi bien du côté extérieur que du côté intérieur.

8. Dispositif suivant l'une des revendications précédentes, caractérisé en ce que les raccords (4) d'entrée de câble et/ou les raccords (15) d'entrée sont métalliques.

9. Dispositif suivant l'une des revendications 1 à 7, caractérisé en ce que les raccords (4) d'entrée de câble sont en matière plastique.

10. Dispositif suivant la revendication 8, caractérisé en ce que les raccords (4) d'entrée de câble sont revêtus d'une matière plastique.

11. Dispositif suivant l'une des revendications précédentes, caractérisé en ce que les raccords (4) d'entrée de câble et/ou les raccords (15) d'entrée qui ne sont pas garnis, comportent une fermeture du type capuchon.

12. Dispositif suivant l'une des revendications précédentes, caractérisé en ce que les trous d'entrée et/ou les raccords (15) d'entrée et/ou les raccords (4) d'entrée de câble sont munis des parois (24) de fermeture qui peuvent être arrachées.

13. Dispositif suivant l'une des revendications précédentes, caractérisé en ce que plusieurs câbles peuvent être introduits dans un raccord (4) d'entrée de câble et en ce que les zones d'interstice à l'extrémité de la pièce (5) de gaine rétrécissable peuvent être rendues étanches par des moyens de ramification connus en soi, de préférence des éléments (6) d'agrafage.

14. Dispositif suivant l'une des revendications précédentes, caractérisé en ce que le corps (3) d'étanchéité est fendu et comporte, dans le plan de séparation, des ouvertures d'entrée de câble supplémentaires.

15. Dispositif suivant l'une des revendications précédentes, caractérisé en ce que les ouvertures d'entrée de câble du corps d'étanchéité sont munies de joints (25) à lèvres les entourant.

16. Dispositif suivant l'une des revendications précédentes, caractérisé en ce que les ouvertures (32) d'entrée de câble du corps (3) d'étanchéité sont munies de taraudages (30) et en ce que des raccords d'entrée ou des prolongements (29) peuvent être vissés aux raccords d'entrée de câble munis d'un taraudage.

17. Dispositif suivant la revendication 16, caractérisé en ce que le prolongement (29) est à épaulement et est muni de deux filetages (30 et (31).

18. Dispositif suivant la revendication 16, caractérisé en ce que le prolongement est formé en tant que raccord fileté comportant un filetage continu.

19. Dispositif suivant l'une des revendications précédentes, caractérisé en ce que le raccord d'entrée de câble est formé en tant que garniture presse-étoupe, constitué d'un écrou (28) d'accouplement et d'une garniture (27) presse-étoupe, qui est issue d'un raccord (2) d'entrée de câble ou d'un prolongement (29).

20. Procédé de fabrication d'un dispositif pour des entrées de câble multiples suivant la revendication 1 ou l'une des revendications 4 à 19, caractérisé en ce qu'il comprend les étapes qui consistent à enfiler les raccords (4) d'entrée de câble sur les extrémités de câbles, à emmancher avec rétraction la pièce (5) de gaine rétrécissable sur le câble, à introduire ces raccords (4) d'entrée de câbles prémontés avec les câbles insérés dans les trous d'entrée du corps d'étanchéité et à immobiliser de manière étanche à la pression les raccords (4) d'entrée de câble par des moyens (11) de vissage et des pièces (9) d'étanchéité.

21. Procédé de fabrication d'un dispositif pour des entrées de câble multiples suivant l'une des revendications 2 ou 4 à 19, caractérisé en ce qu'il comprend l'étape qui consiste à introduire de manière étanche à la pression des raccords (15) d'entrée comportant des écrous (18) d'accouplement dans les trous d'entrée du corps (3) d'étanchéité avec interposition d'une pièce (17) d'étanchéité et à immobiliser de manière étanche à la pression les raccords (4) d'entrée de câbles aux extrémités des raccords d'entrée à l'aide de moyens (13) de vissage et de pièces (14) d'étanchéité.

22. Procédé de fabrication d'un dispositif pour des entrées à câbles multiples suivant l'une des revendications 3 à 19, caractérisé en ce que les raccords (4) d'entrée de câbles sont vissés, de manière étanche à la pression et avec interposition d'une couche d'une pièce (21) d'étanchéité, à l'aide de moyens (22) de vissage sur le filetage d'un raccord (23) d'entrée fixe du corps (3) d'étanchéité.

23. Procédé suivant l'une des revendications 20 à 22, caractérisé en ce qu'il comprend l'étape qui consiste à placer des éléments (6) de fixation dans les zones d'interstice de la pièce (5) de gaine rétrécissable avec introduction de plusieurs câbles dans un raccord (4) d'entrée de câble.
